# EUROPÄISCHE PATENTANMELDUNG

(11) **EP 4 203 142 A1**
(43) Veröffentlichungstag der Anmeldung: **28.06.2023**
(21) Anmeldenummer: 21216823.1
(22) Anmeldetag: 22.12.2021
(51) Int. Cl.: H01M 10/54, B07C 5/34, G01N 23/223

(54) **VERBESSERTES RECYCLING VON BATTERIEN**

(71) Anmelder: Siemens Aktiengesellschaft, 80333 München (DE)
(72) Erfinder: Gigler, Alexander Michael, 86836 Untermeitingen (DE); Goldammer, Matthias, 80687 München (DE); Schulte, Sascha, 91315 Höchstadt (DE)
(74) Vertreter: Siemens Patent Attorneys

(57) **Zusammenfassung**

Die Erfindung gibt ein automatisiertes Verfahren zur Unterstützung des Recyclings von Batterien mit einer technischen Vorrichtung an, wobei die Vorrichtung ausgebildet ist, eine Materialzusammensetzung zu ermitteln, und wobei die Batterien Batteriezellen (5) aufweisen,
gekennzeichnet durch:
- Ermitteln (S1) der Materialzusammensetzung eines Elektrodenmaterials der Batteriezellen (5),
- Sortieren (S2) der Batteriezellen (5) nach der Materialzusammensetzung.

Eine zugehörige Vorrichtung wird ebenfalls angegeben.

## Beschreibung

### GEBIET DER ERFINDUNG

Die Erfindung betrifft ein automatisiertes Verfahren zur Unterstützung des Recyclings von Batterien mit einer technischen Vorrichtung, die ausgebildet ist, eine Materialzusammensetzung zu ermitteln, wobei die Batterien Batteriezellen aufweisen: Die Erfindung betrifft auch eine zugehörige Vorrichtung.

### HINTERGRUND DER ERFINDUNG

Das Recycling von Batteriezellen ist heutzutage ein sehr ineffizienter Vorgang. Im besten Fall werden Batterien in ihre Zellen zerlegt, die Zellen geöffnet und möglichst alle Rohmaterialien extrahiert. Weder die Träger- noch die Gehäusematerialien stellen hierbei ein Problem dar, da es sich v.a. um Aluminium, Stahl und Kupfer handelt. Problematisch sind die Dielektrika ('Batteriematerial') zwischen den Elektroden.

Die Batteriematerialien werden in der Herstellung als zähflüssiges Medium (eine Beschichtungspaste, Englisch: Slurry) auf die Elektrodenbahn abgeschieden oder aufgetragen. Zum einen unterscheiden sich die Slurries je nach Produktionscharge (= Batch), je nach Hersteller und je nach Batterietechnologie signifikant. Zum anderen treten auf Grund der Alterung während des Betriebs (Hitze, Feuchte, Beanspruchung, Ladeverhalten, Ladetechnologie, etc.) lokal Materialveränderungen auf.

Das technische Problem, das einem effizienten Recycling entgegensteht, ist daher die derzeit nicht existente Identifikation von Batteriezellen anhand ihres Batteriematerials, durch das "sortenrein" und somit ressourcen- und kostenseitig effizient recycelt werden könnte.

Derzeit existieren keine bekannten Lösungen für den vollständigen Themenkomplex. Eine einfache aber meist nicht umsetzbare Lösung ist es, ausschließlich Zellen eines exakt identischen Typs in einen Recycling-Vorgang zu geben. Dies würde aber erfordern, dass eine ausreichende Anzahl von Zellen zum Recycling verfügbar steht, um eine derart breite Sortierung in hunderte verschiedene Typen zu ermöglichen. Zurzeit und in den nächsten Jahren ist dies nicht möglich.

### ZUSAMMENFASSUNG DER ERFINDUNG

Es ist Aufgabe der Erfindung, eine Lösung anzugeben, die das Recycling von Batterien vereinfacht.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Bekannte Lösungen gehen von einer Markierung der Batterie auf der Umhüllung aus. Dieser Ansatz funktioniert gut bei Batterien, die als Einzelzellen direkt eingesetzt werden, ist aber für größere Batteriesysteme, bei denen entweder keine Einzelzellen verbaut sind, oder bei denen die Einzelzellen untrennbar miteinander verbunden werden, nicht mehr möglich. Durch eine Identifizierung im Material selbst lassen sich Batterien zuordnen, bei denen die Umhüllung nicht mehr vorhanden oder nicht mehr identifizierbar ist.

Bei üblichen Verfahren wird im Recycling die Reinheit der Sekundärrohstoffe ermittelt, z.B. 99,99%. Bei einem Primärrohstoff direkt aus der Miene ist diese Angabe hinreichend, da mit guter Sicherheit davon ausgegangen werden kann, dass die 0,01% Verunreinigung immer die annähernd gleiche Zusammensetzung haben werden. Ein Sicherstellen des Reinheitsgrades liefert also die Sicherheit nahezu konstanter Materialparameter.

Bei Sekundärmaterialien können die Fremdpartikel, im Beispiel die 0,01%, sehr unterschiedliche Zusammensetzungen haben. Wenn in einem Recycling-Batch beispielsweise vorwiegend eisenphosphathaltige (LFP) Zellen verwendet wurden, im anderen Batch hingegen vorwiegend Nickel-Mangan-Cobalt (NMC), dann ist davon auszugehen, dass die Verunreinigungen im ersten Batch einen erhöhten Eisenanteil haben, im Zweiten hingegen ggf. überdurchschnittlich viel Nickel enthalten ist.

Durch das beanspruchte Verfahren kann dieser unzureichenden Reinheitsangabe (z.B. "99,9% rein") die Information der Zusammensetzung der Verunreinigung hinzugefügt werden.

Die Erfindung beansprucht ein automatisiertes Verfahren zur Unterstützung des Recyclings von Batterien mit einer technischen Vorrichtung, die ausgebildet ist, eine Materialzusammensetzung zu ermitteln, wobei die Batterien Batteriezellen aufweisen, mit den schritten:
- Ermitteln der Materialzusammensetzung eines Elektrodenmaterials der Batteriezellen,
- Sortieren der Batteriezellen nach der Materialzusammensetzung.

In einer Weiterbildung des Verfahrens kann die technische Vorrichtung eine Röntgenfluoreszenz Einheit, eine Energy-Dispersive-XRay Einheit, eine Elektronen-Mikrosonde, eine Laser-Induced-Breakdown-Spectroscopy Einheit, oder eine Einheit zur spektroskopischen Analyse basierend auf Ramanstreuung aufweisen.

In einer Weiterbildung des Verfahrens kann bei der Ermittlung der Materialzusammensetzung ausschließlich das Verhältnis von Inhaltstoffen des Elektrodenmaterials bestimmt werden.

In einer Weiterbildung des Verfahrens können ausschließlich vier oder fünf Verhältnisse von Inhaltsstoffen bei der Ermittlung der Materialzusammensetzung berücksichtigt werden.

In einer Weiterbildung des Verfahrens können die Inhaltstoffe aufweisen:
- Materialphasen von mineralischen Zuschlägen;
- Schwermetalle, die dem Slurry bei der Herstellung der Batteriezelle zugeschlagen wurden, und/oder
- inerte dielektrische Materialien oder Materialien, die das Verhalten der Batterie nicht beeinträchtigen.

Die Erfindung beansprucht auch eine Vorrichtung zur Unterstützung des Recyclings von Batterien, wobei die Batterien Batteriezellen aufweisen, dadurch gekennzeichnet, dass die Vorrichtung ausgebildet und eingerichtet ist, die Materialzusammensetzung eines Elektrodenmaterials der Batteriezellen zu ermitteln, und die Batteriezellen nach der Materialzusammensetzung zu sortieren.

In einer Weiterbildung der Vorrichtung kann die Vorrichtung aufweisen: eine Röntgenfluoreszenz Einheit, eine Energy-Dispersive-XRay Einheit, eine Elektronen-Mikrosonde, eine Laser-Induced-Breakdown-Spectroscopy Einheit, oder eine Einheit zur spektroskopischen Analyse basierend auf Ramanstreuung.

In einer Weiterbildung der Vorrichtung kann die Vorrichtung ausgebildet und eingerichtet sein, bei der Ermittlung der Materialzusammensetzung ausschließlich das Verhältnis von Inhaltstoffen des Elektrodenmaterials zu bestimmen.

In einer Weiterbildung der Vorrichtung kann die Vorrichtung ausgebildet und eingerichtet sein, ausschließlich vier oder fünf Verhältnisse von Inhaltsstoffen bei der Ermittlung der Materialzusammensetzung zu berücksichtigen.

In einer Weiterbildung der Vorrichtung können die Inhaltstoffe aufweisen:
- Materialphasen von mineralischen Zuschlägen;
- Schwermetalle, die absichtlich dem Slurry bei der Herstellung der Batteriezelle zugeschlagen wurden, und/oder
- inerte dielektrische Materialien oder Materialien, die das Verhalten der Batterie nicht beeinträchtigen.

Die Erfindung bietet den Vorteil, dass ein sortenreines Recycling erleichtert und ermöglicht wird.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
- FIG. 1: ein Blockschaltbild einer Vorrichtung zur Unterstützung des Recyclings von Batterien und
- FIG. 2: ein Ablaufdiagramm eines Verfahrens zur Unterstützung des Recyclings von Batterien.

### DETAILLIERTE BESCHREIBUNG DER ERFINDUNG

Ein sogenanntes "Fingerprinting" von Materialien ist der Anmelderin z.B. bei der Rückverfolgung von Plastiksprengstoffen (Semtex) bekannt, da auf Grund von Zuschlägen in der Fertigung auch nach dem Einsatz noch die ursprüngliche Produktionsstätte ausfindig gemacht werden kann. Es ist hier allerdings materialseitig egal, ob der Zuschlagstoff den Einsatz in irgendeiner Weise beeinträchtigen würde, da es sich um minimale Mengen handelt, die für die Explosivität von weit untergeordneter Relevanz sind.

Das eingangs beschriebenen technischen Problems des verbesserten Recyclings von Batterien lässt sich mittels der Materialanalyse der Slurries lösen.

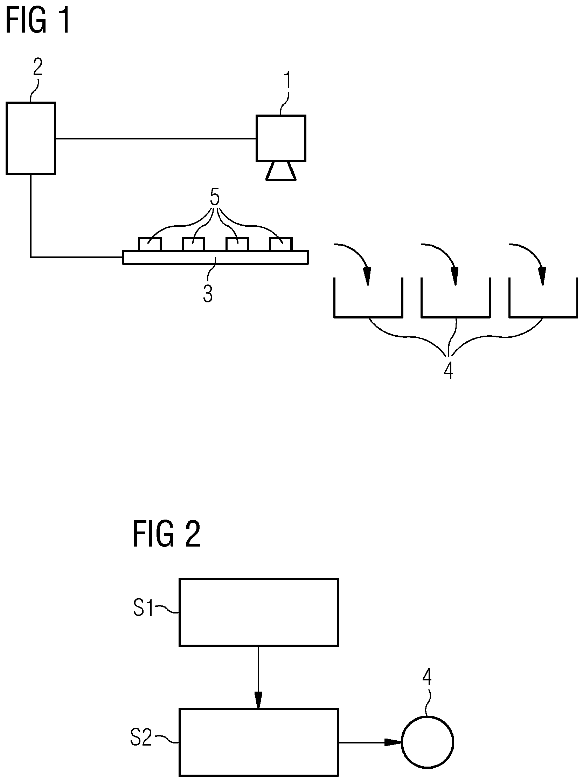

FIG. 1 zeigt ein Blockschaltbild eines Ausführungsbeispiels der Vorrichtung zur Unterstützung und Verbesserung des Recyclings von Batterien und FIG. 2 zeigt ein Ablaufdiagramm eines zugehörigen Verfahrens zur Unterstützung und Verbesserung des Recyclings von Batterien durch Sortieren von Batteriezellen.

Auf einem Transportband 3 fahren die Batteriezellen 5 an einer Röntgenfluoreszenz Einheit 1 (= Charakterisierungstechnologie) vorbei. Die Röntgenfluoreszenz Einheit 1 ermittelt im Schritt S1 im Zusammenspiel mit der Steuer- und Recheneinheit 2 die Materialzusammensetzung des Elektrodenmaterials der Batteriezellen. Anhand der Materialzusammensetzung werden die Batteriezellen in Sammelbehälter 4 im Schritt S2 sortiert und dem Recycling zugeführt.

Unter Einsatz der Charakterisierungstechnologie (wie zum Beispiel typische Röntgenverfahren: XRF = Röntgenfluoreszenz, EDX = Energy-Dispersive-XRays, Elektronen-Mikrosonde, und auch optische Verfahren: LIBS = Laser-Induced-Breakdown-Spectroscopy, Raman, etc.) wird das abgeschiedene Material hinsichtlich seiner Zusammensetzung in der Produktion der Zellen beobachtet. Da die Zusammensetzung des aus dem Skurry gefertigten Elektrodenmaterials signifikant vom Batch / Hersteller / Technologie abhängt, lassen sich aus den Materialeigenschaften wiedererkennbare Verhältnisse ableiten.

Geeignete Zielmaterialien sind:
- Materialphasen (z.B. Hochtemperatur- oder Hochdruck-Phasen von mineralischen Zuschlägen)
- Schwermetalle, die absichtlich dem Slurry zugeschlagen werden
- Generell: inerte dielektrische Materialien oder Inhaltstoffe, die das Verhalten der Batterie nicht beeinträchtigen und somit insbesondere keinen Kurzschluss oder eine Absenkung des Innenwiderstandes der Batterie bewirken.

Gegeben eine Messung mittels XRF bei der auf die Verhältnisse der Slurry-Komponenten im Elektrodenmaterial hin ausgewertet wird (beispielsweise vier oder fünf Materialverhältnisse). Da sich das Verhältnis der Zusammensetzung in der Batteriezelle über den Lebenszyklus hinweg nicht ändern wird, kann die Zusammensetzung des Ausgangs-Slurries hinreichend genau für eine Rückverfolgung zum Ausgangsmaterial bestimmt werden.

Gleiches gilt für die anderen möglichen Zuschläge (ob intrinsisch vorhanden oder künstlich beigefügt) und Messverfahren. Eine Alterung wird sich tendenziell lokal auswirken und im Mittel der Batteriezelle das Gesamtergebnis nicht verfälschen. Vor allem die Verhältnisse im Gegensatz zu der absoluten Menge der Komponenten bleibt hierbei stabil.

Insbesondere Verfahren wie XRF sind nur auf die Elementverteilung empfindlich und können auch zur Identifizierung verwendet werden, wenn chemische Materialveränderungen z.B. durch die Alterung der Batterie stattgefunden haben.

Falls technisch und kommerziell umsetzbar, können diese nachträglich ermittelten Parameter mit Datensätzen zur Fertigung ergänzt werden, also z.B. mit Informationen aus dem geplanten Batterie-Pass oder ähnlichen Dokumenten.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Röntgenfluoreszenz Einheit
- 2: Steuer- und Recheneinheit
- 3: Transportband
- 4: Sammelbehälter
- 5: Batteriezelle

- S1: Ermittlung der Materialzusammensetzung
- S2: Sortieren der Batteriezellen

## Patentansprüche

1. Automatisiertes Verfahren zur Unterstützung des Recyclings von Batterien mit einer technischen Vorrichtung, die ausgebildet ist, eine Materialzusammensetzung zu ermitteln, und wobei die Batterien Batteriezellen (5) aufweisen, **gekennzeichnet durch**:
- Ermitteln (S1) der Materialzusammensetzung eines Elektrodenmaterials der Batteriezellen (5),
- Sortieren (S2) der Batteriezellen (5) nach der Materialzusammensetzung.

2. Verfahren nach Anspruch 1,
**dadurch gekennzeichnet,**
**dass** die technische Vorrichtung eine Röntgenfluoreszenz Einheit (1), eine Energy-Dispersive-XRay Einheit, eine Elektronen-Mikrosonde, eine Laser-Induced-Breakdown-Spectroscopy Einheit, oder eine Einheit zur spektroskopischen Analyse basierend auf Ramanstreuung aufweist.

3. Verfahren nach Anspruch 1 oder 2,
**dadurch gekennzeichnet,**
**dass** bei der Ermittlung (S2) der Materialzusammensetzung ausschließlich die Verhältnisse von Inhaltstoffen des Elektrodenmaterials bestimmt werden.

4. Verfahren nach Anspruch 3,
**dadurch gekennzeichnet,**
**dass** ausschließlich vier oder fünf Verhältnisse von Inhaltsstoffen bei der Ermittlung (S2) der Materialzusammensetzung berücksichtigt werden.

5. Verfahren nach Anspruch 3 oder 4,
**dadurch gekennzeichnet,**
**dass** die Inhaltstoffe aufweisen:
- Materialphasen von mineralischen Zuschlägen;
- Schwermetalle, die dem Slurry bei der Herstellung der Batteriezelle zugeschlagen wurden, und/oder
- inerte dielektrische Materialien oder Materialien, die das Verhalten der Batterie nicht beeinträchtigen.

6. Vorrichtung zur Unterstützung des Recyclings von Batterien, wobei die Batterien Batteriezellen (5) aufweisen,
**dadurch gekennzeichnet,**
**dass** die Vorrichtung ausgebildet und eingerichtet ist, die Materialzusammensetzung eines Elektrodenmaterials der Batteriezellen (5) zu ermitteln, und die Batteriezellen (5) nach der Materialzusammensetzung zu sortieren.

7. Vorrichtung nach Anspruch 6,
**gekennzeichnet durch**:
eine Röntgenfluoreszenz Einheit (1), eine Energy-Dispersive-XRay Einheit, eine Elektronen-Mikrosonde, eine Laser-Induced-Breakdown-Spectroscopy Einheit, oder eine Einheit zur spektroskopischen Analyse basierend auf Ramanstreuung.

8. Verfahren nach Anspruch 6 oder 7,
**dadurch gekennzeichnet,**
**dass** die Vorrichtung ausgebildet und eingerichtet ist, bei der Ermittlung der Materialzusammensetzung ausschließlich Verhältnisse von Inhaltstoffen des Elektrodenmaterials zu bestimmen.

9. Vorrichtung nach Anspruch 8,
**dadurch gekennzeichnet,**
**dass** die Vorrichtung ausgebildet und eingerichtet istm ausschließlich vier oder fünf Verhältnisse von Inhaltsstoffen bei der Ermittlung der Materialzusammensetzung ZU berücksichtigen.

10. Vorrichtung nach Anspruch 8 oder 9,
**dadurch gekennzeichnet,**
**dass** die Inhaltstoffe aufweisen:
- Materialphasen von mineralischen Zuschlägen;
- Schwermetalle, die dem Slurry bei der Herstellung der Batteriezelle zugeschlagen wurden, und/oder
- inerte dielektrische Materialien oder Materialien, die das Verhalten der Batterie nicht beeinträchtigen.
